# EUROPEAN PATENT APPLICATION

(11) **EP 4 718 581 A1**
(43) Date of publication of application: **01.04.2026**
(21) Application number: 25158465.2
(22) Date of filing: 18.02.2025
(51) Int. Cl.: H01M 10/613, H01M 10/6556, H01M 10/6569, H01M 10/6557, H01M 50/204, H01M 50/249

(54) **VEHICLE BATTERY HEAT TRANSFER MEMBER AND VEHICLE BATTERY MODULE**

(30) Priority: 25.09.2024 KR 20240129938
(71) Applicant: Hyundai Mobis Co., Ltd., Gangnam-gu Seoul 06141 (KR)
(72) Inventor: KOO, Do Hyun, Yongin-si 16891 (KR); SEON, Seung Won, Yongin-si 16891 (KR); KIM, Yoon Jeong, Yongin-si 16891 (KR); OH, Ju Seok, Yongin-si 16891 (KR)
(74) Representative: Vossius & Partner Patentanwälte Rechtsanwälte mbB

(57) **Abstract**

A vehicle battery heat transfer member according to one embodiment of the present invention, which is disposed between battery cells to transfer heat generated in the battery cells toward a cooling plate, may include a main plate in which cooling channels are formed such that an operating fluid passes through the cooling channels and cover plates coupled to both surfaces of the main plate, wherein a bridge part connecting the cooling channels in a width direction may be formed between the cooling channels in the main plate.

## Description

### 1. Field of the Invention

The present invention relates to a vehicle battery heat transfer member, and more specifically, to a vehicle battery heat transfer member and a vehicle battery module for stably maintaining a temperature of a battery cell.

### 2. Discussion of Related Art

Secondary batteries are batteries that can be charged and discharged, unlike primary batteries that cannot be recharged, and are used as power sources not only in the fields of small high-tech electronic devices such as portable phones, notebooks, and computers, but also in energy storage systems (ESSs) and electric vehicles or hybrid vehicles.

Among them, an operating temperature of lithium-ion batteries mainly used for vehicle batteries generally ranges from 0 to 60 °C. However, as a temperature therein becomes lower, a capacity of a battery decreases due to an increase in internal resistance of a battery cell, and when an internal temperature of the battery cell becomes greater than 60 °C, a possibility of thermal runaway increases. Accordingly, a battery management system (BMS) is used to stably maintain a temperature of a battery cell while a vehicle battery is being charged or discharged.

In the conventional vehicle battery cooling apparatus disclosed in Korean Laid-Open Patent No. 10-2020-0125114, a heat exchange member that exchanges heat with battery cells is disclosed. When the size of a battery cell increases or heat generated in the battery cell increases in a heat transfer direction, a difference between a maximum temperature and a minimum temperature of the battery cell increases, which causes the reduction of efficiency and stability of the battery cell, and thus the heat exchange member is disposed.

The improvement of cooling performance using the heat exchange member disclosed in the related art is determined by the thickness and thermal conductance of the heat exchange member. More specifically, as the thermal conductance of the heat exchange member is higher and the thickness thereof is greater, the cooling performance can be improved. However, when the thermal conductance and thickness of a heat exchange member are changed, there is a problem of increasing the size and weight of an overall battery module.

### SUMMARY OF THE INVENTION

The present invention is directed to providing a vehicle battery heat transfer member and a vehicle battery module capable of stably maintaining a temperature of a battery cell even during the high-speed charging or high-power operation of a battery by minimizing increases in volume and weight caused by the existing heat exchange member.

In addition, the present invention is directed to providing a vehicle battery heat transfer member and a vehicle battery module in which a structure of a cooling channel is stably supported because a bridge part is provided on the cooling channel formed in a main plate.

Objectives to be achieved by the present invention are not limited to the above-described objectives, and other objectives, which are not described above, may be clearly understood by those skilled in the art through the following specification.

In accordance with one aspect of the present invention, there is provided a vehicle battery heat transfer member which is disposed between battery cells to transfer heat generated in the battery cells toward a cooling plate and includes a main plate in which cooling channels are formed such that an operating fluid passes through the cooling channels and cover plates coupled to both surfaces of the main plate, wherein a bridge part connecting the cooling channels in a width direction is formed between the cooling channels in the main plate.

The bridge part may be disposed to be located on an extension line in a longitudinal direction of the main plate.

The cooling channels may include an outer peripheral part communicating with an injection part through which the operating fluid is injected and a capillary part which extends from each end portion of the outer peripheral part and is formed to be bent from both ends of the outer peripheral part to form a closed loop inside the outer peripheral part.

The bridge part may be formed in only one linear section in an end portion of the capillary part.

The cover plate may be manufactured of a clad material.

An injection part through which the operating fluid is injected may be provided on one side of the main plate, and a cover injection part corresponding to the injection part may be provided on one side of the cover plate.

After the operating fluid is injected through the injection part, the cover injection part may be pressed and bonded to the cover plate at an opposite side to close the injection part, and a pinch groove may be formed in a surface of the cover injection part.

In accordance with another aspect of the present invention, there is a provided a vehicle battery module including a plurality of battery cells which are stacked adjacent to each other, a vehicle battery heat transfer member disposed between the battery cells, a thermal interface material disposed under the battery cell, and a cooling block disposed under the thermal interface material.

A surface contact portion extending to be in surface contact with the thermal interface material may be provided in the battery heat transfer member.

An end portion of the surface contact portion may be bent to be in surface contact with a surface or an inner portion of the thermal interface material.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is an exploded perspective view illustrating a vehicle battery heat transfer member according to one embodiment of the present invention;
FIG. 2 is a perspective view illustrating a main plate of the vehicle battery heat transfer member according to one embodiment of the present invention;
FIG. 3 is a plan view illustrating the main plate of the vehicle battery heat transfer member according to one embodiment of the present invention;
FIG. 4 is an enlarged view illustrating a region indicated in FIG. 3;
FIG. 5 is a cross-sectional view along line A-A of FIG. 4;
FIG. 6 is a cross-sectional view illustrating a stack structure of the vehicle battery heat transfer member according to one embodiment of the present invention;
FIG. 7 is a perspective view illustrating a pinch part that is not formed yet in the vehicle battery heat transfer member according to one embodiment of the present invention;
FIG. 8 is a perspective view illustrating the pinch part formed in the vehicle battery heat transfer member according to one embodiment of the present invention;
FIG. 9 is a plan view illustrating the vehicle battery heat transfer member according to one embodiment of the present invention;
FIG. 10 is a cross-sectional view along line B-B of FIG. 9;
FIG. 11 is a cross-sectional view along line C-C of FIG. 9;
FIG. 12 is an enlarged view illustrating a region indicated in FIG. 9;
FIG. 13 is a cross-sectional view along line D-D of FIG. 12;
FIG. 14 is a cross-sectional view along line E-E of FIG. 12;
FIG. 15 is a view illustrating a vehicle battery module according to one embodiment of the present invention;
FIG. 16 is a view illustrating one example of a battery heat transfer member in the vehicle battery module according to one embodiment of the present invention;
FIG. 17 is a view illustrating another example of the battery heat transfer member in the vehicle battery module according to one embodiment of the present invention; and
FIG. 18 is a view illustrating still another example of the battery heat transfer member in the vehicle battery module according to one embodiment of the present invention.

### DETAILED DESCRIPTION OF EXEMPLARY EMBODIMENTS

Since the present invention may be variously modified and have several embodiments, specific embodiments will be illustrated in the accompanying drawings and described in detail. However, this is not intended to limit the present invention to the specific embodiments, and it should be appreciated that all changes, equivalents, and substitutes falling within the spirit and technical scope of the present invention are encompassed in the present invention. In the description of the embodiments, certain detailed descriptions of the related art will be omitted when it is deemed that they may unnecessarily obscure the gist of the inventive concept.

While terms such as "first" and "second" may be used to describe various components, such components are not limited by the above terms. These terms are used only to distinguish one component from another.

Terms used herein are only for the purpose of describing particular embodiments and are not intended to limit the present invention. Singular forms are intended to include the plural forms, unless the context clearly indicates otherwise. In the present specification, it should be understood that the terms "comprise," "comprising," "include," and/or "including" used herein specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but this may also mean that two or more components are indirectly connected through other components or are physically connected and also electrically connected, or are one thing even referred to as different names according to positions or functions thereof.

In addition, when a first component is described as being formed or disposed "on (above)" or "under (below)" a second component, such a description includes both a case in which the two components are formed or disposed in direct contact with each other and a case in which one or more other components are interposed between the two components. In addition, when the first component is described as being formed "on (above) or under (below)" the second component, such a description may include a case in which the first component is formed at an upper side or a lower side with respect to the second component.

Hereinafter, one embodiment of a vehicle battery heat transfer member and a vehicle battery module will be described in detail with reference to the accompanying drawings, and when the embodiment is described with reference to the accompanying drawings, components which are the same or correspond to each other will be denoted by the same reference numerals, and redundant description thereof will be omitted.

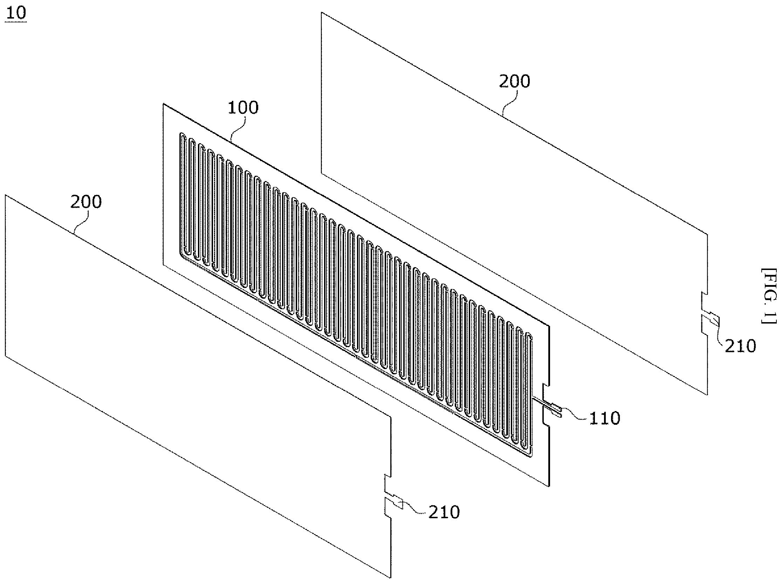

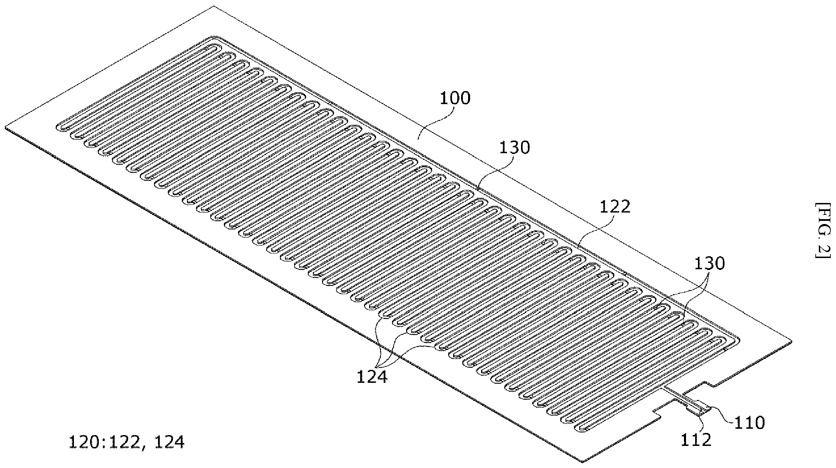

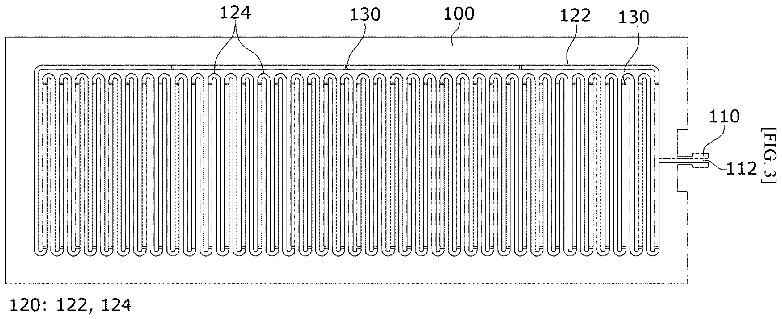

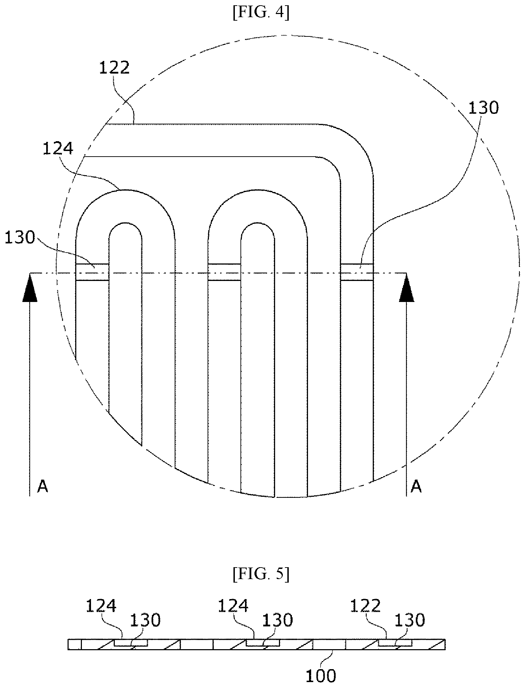

FIG. 1 is an exploded perspective view illustrating a vehicle battery heat transfer member according to one embodiment of the present invention, FIG. 2 is a perspective view illustrating a main plate of the vehicle battery heat transfer member according to one embodiment of the present invention, and FIG. 3 is a plan view illustrating the main plate of the vehicle battery heat transfer member according to one embodiment of the present invention. FIG. 4 is an enlarged view illustrating a region indicated in FIG. 3, and FIG. 5 is a cross-sectional view along line A-A of FIG. 4.

According to the drawings, the vehicle battery heat transfer member according to one embodiment of the present invention is a vehicle battery heat transfer member 10 which is disposed between battery cells 20 and transfers heat generated in the battery cells 20 toward a cooling block 40, and the vehicle battery heat transfer member 10 may include a main plate 100 in which cooling channels 120, through which an operating fluid passes, are formed and cover plates 200 coupled to both surfaces of the main plate 100. Bridge parts 130, connecting the cooling channels 120 in a width direction may be formed between the cooling channels 120 in the main plate 100.

The battery heat transfer member 10 is disposed between the battery cells 20 and transfers heat to a thermal interface material (TIM) 30 and the cooling block 40. The battery heat transfer member 10 may be disposed in each space between the battery cells 20, or in each space between cell modules formed by a plurality of battery cells 20.

In the present embodiment, a pulsating heat pipe (PHP) is used as the battery heat transfer member 10. The PHP is formed such that an operating fluid of a liquid slug type alternately showing liquid and gas phases is circulated in a passage of a closed loop, vibrates by itself, and transfers heat from an evaporation region to a condensation region during the circulation flow and the self-vibration process. The PHP has advantages that a structure may be simple, reliability may be high, and the PHP may be manufactured to have a small volume when compared to a heat pipe having a wick structure.

As illustrated in FIG. 1, the battery heat transfer member 10 may include the main plate 100 disposed in a central portion thereof and the cover plates 200 which are coupled to both surface of the main plate 100 to cover the main plate 100. That is, the battery heat transfer member 10 is formed by coupling the main plate 100 to which a structure of the PHP is applied and the cover plates 200 covering the main plate 100.

The main plate 100 may be manufactured in a rectangular plate shape. An injection part 110 through which the operating fluid is injected is provided to protrude from one side of the main plate 100. The injection part 110 protrudes a predetermined length from one side of the main plate 100, and an injection channel 112 through which the operating fluid flows is formed inside the injection part 110. The injection channel 112 may extend from the injection part 110 to an inside of the main plate 100 and communicate with the cooling channels 120 formed inside the main plate 100.

The cooling channels 120 may be formed inside the main plate 100 and may include an outer peripheral part 122 communicating with the injection channel 112 and capillary parts 124 which extend from end portions of the outer peripheral part 122 and formed to be bent from both end portions of the outer peripheral part 122 to form a closed loop inside the outer peripheral part 122. The capillary parts 124 may be formed in a crooked shape to form a plurality of channels, and end portions of the capillary part 124 may be bent to change a direction of the channel into an opposite direction. **In** the cooling channels 120 formed as described above, when heat generated in the battery cell 20 is transferred to one end portions of the capillary parts 124, the operating fluid vibrates by itself and transfers heat from the evaporation region to the condensation region (the other end portion) in the self-vibration process.

As an example, hydrofluoro-olefin (HFO) may be used as the operating fluid which flows through the cooling channels 120, but the present invention is not limited thereto, and one of various refrigerants may be used as the operating fluid.

**In** the present embodiment, the bridge parts 130 which connect the cooling channels 120 in the width direction are provided between the cooling channels 120 in the main plate 100. The bridge parts 130 may be formed in the width direction of the cooling channels 120 which is perpendicular to a flow direction of the operating fluid and may be provided as a plurality of bridge parts 130 along the cooling channels 120.

The bridge parts 130 are provided to support a structure of the cooling channels 120 formed in the main plate 100. When the bridge parts 130 are not formed, the cooling channels 120 may move without being stably fixed by the structure of the PHP. The bridge parts 130 may be provided in the outer peripheral part 122 and the capillary parts 124 which constitute the cooling channels 120 and may be provided as the plurality of bridge parts 130, and the plurality of bridge parts 130 may be disposed in various parts. As an example, the plurality of bridge parts 130 may be provided at predetermined intervals along the outer peripheral part 122. As an example, the bridge parts 130 may be disposed on the end portions of the capillary parts 124. As an example, the bridge part 130 may be disposed in only one linear section in the end portion of the capillary part 124 as in FIG. 4. That is, the bridge part 130 may be provided in only one of two linear sections without being provided in a curved section in the end portion of the capillary part 124.

In addition, since the bridge part 130 is a structure for stably fixing the structure of the cooling channel 120, the bridge part 130 should not hinder a flow of the operating fluid. Accordingly, the bridge part 130 may be formed to occupy a portion of a flowing cross section of the cooling channel 120. Referring to FIG. 5, the bridge part 130 may be formed at only a lower side based on the drawing. As an example, the bridge part 130 may be formed to occupy 50% or less of the flowing cross section of the cooling channel 120. In the present drawing, it is illustrated that the bridge part 130 are formed at only the lower side of the flowing cross section of the cooling channel 120, but the present invention is not limited thereto, and the bridge part 130 may be formed at only an upper side or in only a central portion of the flowing cross section of the cooling channel 120.

As an example, the bridge part 130 may be disposed to be located on an extension line in a longitudinal direction of the main plate 100. This is because the bridge part 130 is provided in a width direction of the capillary part 124 disposed parallel to the width direction (a direction perpendicular to the longitudinal direction) of the main plate 100.

A thickness of the bridge part 130 should be designed so as not to hinder a flow of the operating fluid. For example, as the thickness of the bridge part 130 increases, the structure of the cooling channel 120 is stably supported, but the flow of the operating fluid is not smooth. In addition, as the thickness of the bridge part 130 decreases, the flow of the operating fluid is smooth but the structure of the cooling channel 120 may be less stably supported. Accordingly, the design of the thickness of the bridge part 130 considering the above fact is required.

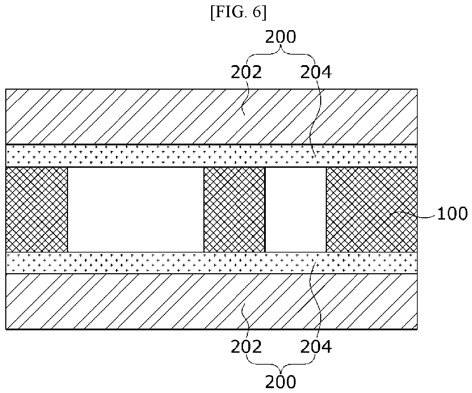

FIG. 6 is a cross-sectional view illustrating a stack structure of the vehicle battery heat transfer member according to one embodiment of the present invention.

Referring to FIG. 6, in the present embodiment, the cover plate 200 may be manufactured of a clad material. Generally, the clad material is a stack-typed composite material in which surfaces of two or more metal materials are integrally bonded. When the clad material is properly used, advantages of each of the metal materials used for the clad material are maximized, and usage of the expensive materials may be reduced, and thus the clad material is widely used in various application fields.

The cover plate 200 may include a base material 202 and a filler material 204. As an example, an Al 3003 with a melting point of 640 °C may be used as the base material 202, and an Al 4047 with a melting point of 577 °C may be used as the filler material 204, but the present invention is not limited thereto. As an example, the Al 3003 with the melting point of 640 °C may be used as the main plate 100, but the present invention is not limited thereto.

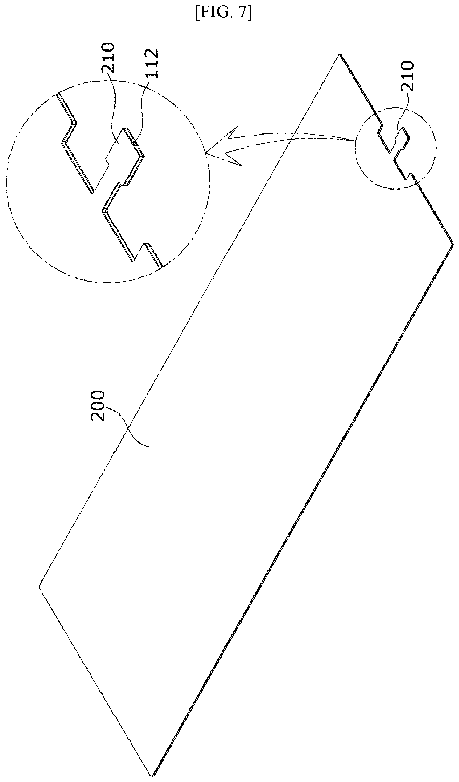

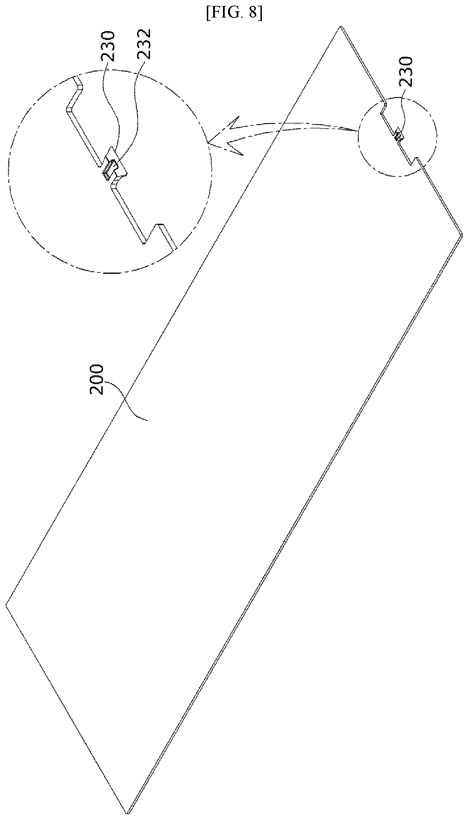

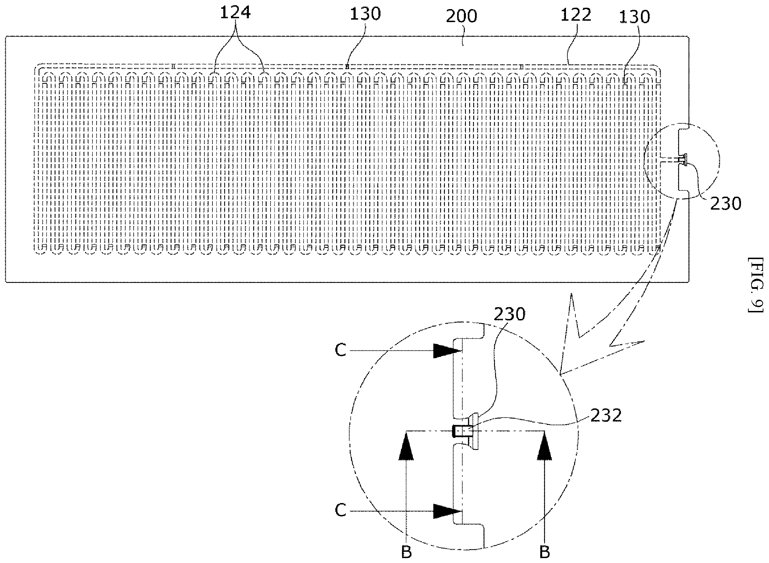

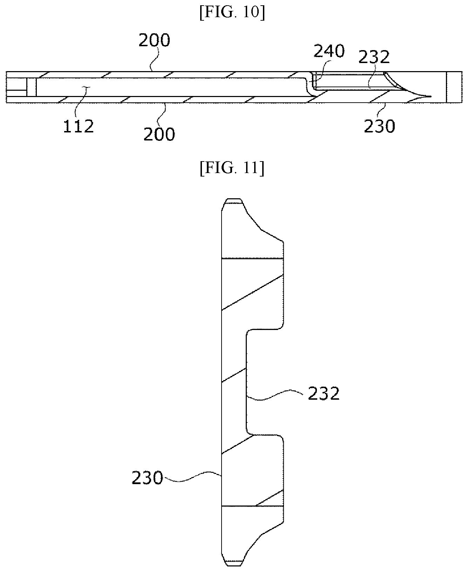

FIG. 7 is a perspective view illustrating a pinch part that is not formed yet in the vehicle battery heat transfer member according to one embodiment of the present invention, and FIG. 8 is a perspective view illustrating the pinch part formed in the vehicle battery heat transfer member according to one embodiment of the present invention. FIG. 9 is a plan view illustrating the vehicle battery heat transfer member according to one embodiment of the present invention. FIG. 10 is a cross-sectional view along line B-B of FIG. 9, and FIG. 11 is a cross-sectional view along line C-C of FIG. 9.

Referring to FIG. 7, the present drawing is a view illustrating a pinch part 230 that is not formed yet in the battery heat transfer member 10. That is, the present drawing is a view illustrating a state in which the cover plates 200 are coupled to both surfaces of the main plate 100 in which the cooling channels 120 are formed.

In this state, the operating fluid is injected through the injection channel 112 of the injection part 110. The injection part 110 may be located between cover injection parts 210 formed to correspond to the cover plates 200 to allow the operating fluid to be injected through the injection channel 112.

When the injection of the operating fluid is completed, an operator closes the injection part 110 such that the cooling channels 120 form a closed loop. FIG. 8 is a view illustrating the pinch part 230 formed through pinch forming in the battery heat transfer member 10. That is, after the injection of the operating fluid is completed, the operator presses any one cover injection part 210 of the cover plates 200. In the present drawing, it is illustrated that the cover injection part 210 of the cover plate 200 coupled to an upper portion is pressed, and the cover injection part 210 pressed as described above forms a pinch groove 232 after the formation. The cover injection part 210 may be pressed by a working tool, the cover injection part 210 pressed as described above may be pressed against the injection channel 112 to close the injection channel 112, and the pinch groove 232 may be formed in the pinch part 230. However, when the cover injection part 210 of the cover plate 200 disposed on a lower portion is pressed to pinch mold, the pinch groove 232 may also be formed at a lower side.

Meanwhile, ends of the injection part 110 and the cover injection parts 210 may be cut at the same time as the above-described pressing process.

Referring to FIG. 10, the cover injection part 210 of the cover plate 200 disposed on the upper portion is pinch-formed to bend a bent portion 240 and press the bent portion 240 toward a portion illustrated with a dotted line. The cover injection part 210 pressed as described above is bonded to the cover injection part 210 of the cover plate 200 disposed on the lower portion to close the injection channel 112.

When the pinch part 230 is formed at one side of the battery heat transfer member 10, the cooling channels 120 may be closed, and the operating fluid may be evaporated and condensed while flowing through the cooling channels 120 which are the closed loop.

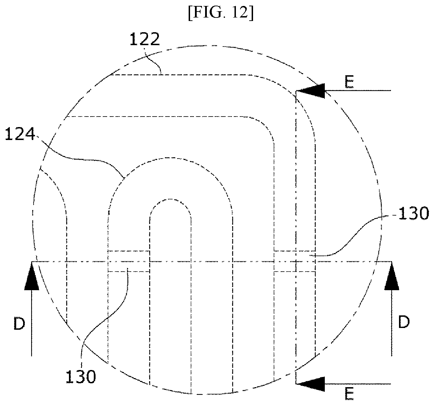

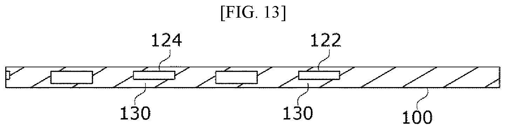

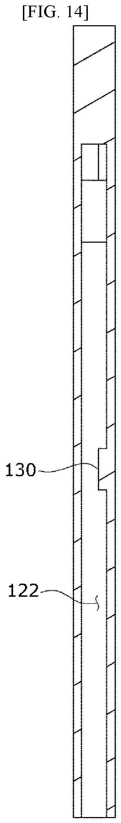

FIG. 12 is an enlarged view illustrating a region indicated in FIG. 9, FIG. 13 is a cross-sectional view along line D-D of FIG. 12, and FIG. 14 is a cross-sectional view along line E-E of FIG. 12.

Referring to FIGS. 12 to 14, when the formation of the pinch part 230 is completed in the battery heat transfer member 10, the cooling channels 120 may be closed from the outside, and the bridge parts 130 may be bonded to the cover plate 200 disposed at one surface thereof. However, when the bridge part 130 is disposed in the central portion of the flowing cross section of the cooling channel 120, the bridge part 130 may not be bonded to the cover plate 200.

When the bridge part 130 is provided in the capillary part 124 of the cooling channel 120, the flowing cross section of the operating fluid may be reduced in a vertical direction as illustrated in FIGS. 13 and 14. In this case, the thickness of the bridge part 130 should be properly designed so as not to hinder a flow of the operating fluid as described above.

As described above, in the vehicle battery heat transfer member 10, a temperature of the battery cell 20 can be stably maintained even during the high-speed charging and high-power operation of a battery by minimizing increases in volume and weight due to the conventional heat exchange member.

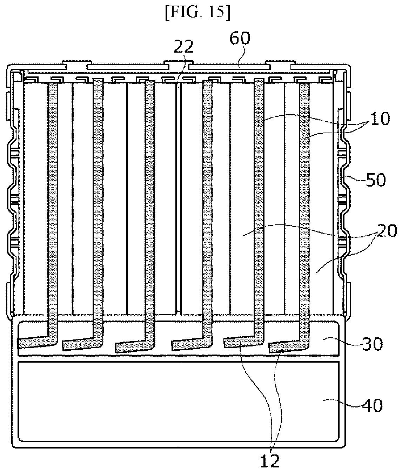

FIG. 15 is a view illustrating a vehicle battery module according to one embodiment of the present invention.

Referring to FIG. 15, the vehicle battery module according to one embodiment of the present invention may include a plurality of battery cells 20 disposed adjacent to each other, vehicle battery heat transfer members 10 disposed between the battery cells 20, the TIM 30 disposed under the battery cells 20, and the cooling block 40 disposed under the TIM 30.

The plurality of battery cells 20 may be stacked to be in surface contact with and adjacent to each other. A structure of the battery cells 20 which are in surface contact with and are stacked on each other is to apply uniform surface pressure on each of the battery cells 20. The plurality of battery cells 20 may form one cell module. In the cell module, the battery cells 20 may be disposed to be stacked adjacent to each other from a front end to a rear end of the cell module. For example, as illustrated in the drawing, three battery cells 20 may be in surface contact with each other to form the cell module.

The battery heat transfer member 10 may be disposed in each space between the battery cells 20 or in each space between every two battery cells 20. In addition, the battery heat transfer member 10 may be disposed in each space between the cell modules.

A surface pressure pad 22 is a pad attached to fix the battery cells 20, and since both surfaces thereof have adhesive forces, the battery cells 20 may be strongly fixed, and when the battery cells 20 are separated, the battery cells 20 may be detached using a small force. The surface pressure pad 22 may be manufactured in the form of a film by melting polyurethane (PU)-based or silicone-based resin, coating a film with the resin, and cooling the resin.

The surface pressure pad 22 may also be disposed in each space between the battery cells 20 or in each space between every two battery cells 20. In addition, the surface pressure pad 22 may be disposed in each space between the cell modules.

As an example, insulation coating may be performed on one surface of the battery heat transfer member 10. As an example, one surface of the battery heat transfer member 10 may be disposed to be in contact with the surface pressure pad 22.

Meanwhile, a surface contact portion 12, of which one end portion is bent, is formed in a lower end of the battery heat transfer member 10 to be in surface contact with an inner portion of the TIM 30. The surface contact portion 12 may be provided for smoothly exchanging heat with the TIM 30 formed to extend from a lower end of the battery heat transfer member 10, and bent in a perpendicular direction.

The TIM 30 and the cooling block 40 are disposed under the battery cell 20 and serve to dissipate or cool heat of the battery cell 20.

As described above, the surface contact portion 12 of the battery heat transfer member 10 may be connected to the TIM 30 to dissipate heat through smoothly exchanging heat with the TIM 30. The surface contact portion 12 may be in contact with and connected to an upper surface of the TIM 30 or inserted into and connected to a groove formed in the upper surface of the TIM 30.

End plates 50 may be provided on a front end and a rear end of each of the plurality of stacked battery cells 20. The end plates 50 disposed as described above may support outer sides of the battery cells 20.

A cover 60 serves to cover an upper surface of the battery cells 20. The cover 60 may be formed of, for example, a plastic or metal material. However, the material of the cover 60 is not limited thereto, and one of various materials may be used for the cover 60 rather than the material.

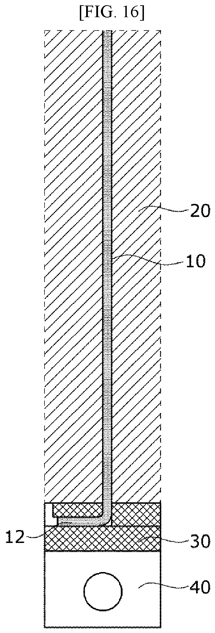

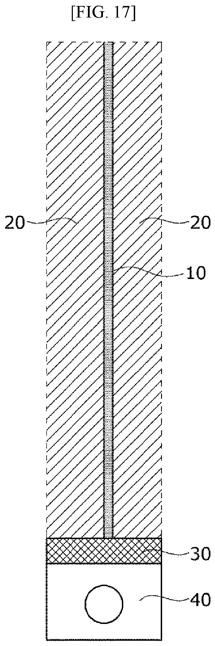

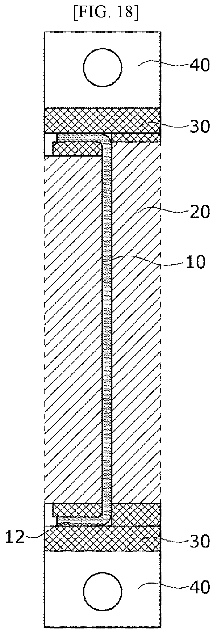

FIG. 16 is a view illustrating one example of the battery heat transfer member in the vehicle battery module according to one embodiment of the present invention, FIG. 17 is a view illustrating another example of the battery heat transfer member in the vehicle battery module according to one embodiment of the present invention, and FIG. 18 is a view illustrating still another example of the battery heat transfer member in the vehicle battery module according to one embodiment of the present invention.

Referring to FIG. 16, as described above, a surface contact portion 12 in surface contact with a TIM 30 is provided in a lower end of a battery heat transfer member 10. An end portion of the surface contact portion 12 may be formed to be bent and be in surface contact with the TIM 30. In this case, the surface contact portion 12 may be in surface contact with a surface of the TIM 30 or may be inserted into the TIM 30 to be in surface contact with the TIM 30.

Referring to FIG. 17, a surface contact portion 12 in surface contact with a TIM 30 is provided in a lower end of a battery heat transfer member 10. In this case, a linearly extending end portion of the surface contact portion 12 may be in direct surface contact with the TIM 30 without having a bent shape as in FIG. 16. In this case, the surface contact portion 12 may be in surface contact with a surface of the TIM 30 or may be inserted into the TIM 30 to be in surface contact therewith.

Referring to FIG. 18, TIMs 30 and cooling blocks 40 may be disposed on a battery cell 20 in addition to being disposed under the battery cell 20. Surface contact portions 12 in surface contact with the TIMs 30 are provided on an upper end and a lower end of a battery heat transfer member 10. End portions of the surface contact portions 12 extending to an upper portion and a lower portion of the battery heat transfer member 10 may be formed to be bent and be in surface contact with the TIMs 30. **In** this case, the surface contact portions 12 may be in surface contact with surfaces of the TIMs 30 or may be inserted into the TIMs 30 to be in surface contact the TIMs 30.

According to one embodiment of the present invention, a vehicle battery heat transfer member can stably maintain a temperature of a battery cell even during the high-speed charging or high-power operation of a battery by minimizing increases in volume and weight of an existing heat exchange member.

**In** addition, according to one embodiment of the present invention, since a bridge part is provided on a cooling channel formed in a main plate, a structure of the cooling channel can be stably supported.

## Claims

1. A vehicle battery heat transfer member disposed between battery cells to transfer heat generated in the battery cells toward a cooling plate, the vehicle battery heat transfer member comprising:
a main plate in which cooling channels are formed such that an operating fluid passes through the cooling channels; and
cover plates coupled to opposing surfaces of the main plate,
wherein a bridge part, connecting the cooling channels in a width direction, is formed between the cooling channels in the main plate.

2. The vehicle battery heat transfer member of claim 1, wherein the bridge part is disposed to be located on an extension line in a longitudinal direction of the main plate.

3. The vehicle battery heat transfer member of claim 1, or 2, wherein the cooling channels include:
an outer peripheral part communicating with an injection part through which the operating fluid is injected; and
a capillary part which extends from each end portion of the outer peripheral part and is formed to be bent from both ends of the outer peripheral part to form a closed loop inside the outer peripheral part.

4. The vehicle battery heat transfer member of claim 3, wherein the bridge part is formed in a single linear section at an end portion of the capillary part.

5. The vehicle battery heat transfer member of any one of claims 1 to 4, wherein the cover plates are manufactured of a clad material.

6. The vehicle battery heat transfer member of any one of claims 1 to 5, wherein:
an injection part through which the operating fluid is injected is provided on one side of the main plate; and
a cover injection part corresponding to the injection part is provided on one side of the each cover plate.

7. The vehicle battery heat transfer member of claim 6, wherein, after the operating fluid is injected through the injection part:
the cover injection part is pressed and bonded to the cover plate at an opposite side to close the injection part; and
a pinch groove is formed on a surface of the cover injection part.

8. A vehicle battery module comprising:
a plurality of battery cells which are stacked adjacent to each other;
the vehicle battery heat transfer member of any one of claims 1 to 7, which is disposed between the battery cells;
a thermal interface material disposed under the battery cells; and
a cooling block disposed under the thermal interface material.

9. The vehicle battery module of claim 8, wherein a surface contact portion that extends to maintain surface contact with the thermal interface material is provided in the battery heat transfer member.

10. The vehicle battery module of claim 9, wherein an end portion of the surface contact portion is bent to maintain surface contact with either a surface or an inner portion of the thermal interface material.
